# EUROPEAN PATENT APPLICATION

(11) **EP 3 960 510 A1**
(43) Date of publication of application: **02.03.2022**
(21) Application number: 21175566.5
(22) Date of filing: 24.05.2021
(51) Int. Cl.: B60H 1/32, F16L 37/00

(54) **DRAIN PIPE FOR A VEHICLE HVAC SYSTEM**

(30) Priority: 28.08.2020 SI 202000150
(71) Applicant: Siliko d.o.o., 1360 Vrhnika (SI)
(72) Inventor: Mrzlikar, Ziga, 1360 Vrhnika (SI); Dolenc, Mitja, 6225 Hrusevje (SI); Kostanjevec, Andrej, 1294 Visnja Gora (SI); Bucar, Tomaz, 1262 Dol pri Ljubljani (SI)
(74) Representative: Patentni Biro AF d.o.o.

(57) **Abstract**

Improved drain pipe for ventilation and air conditioning system in vehicles, having in its interior or exterior a reinforcement element (2), preferably made from hard rubber, plastic material or metal, which is installed in the area of the sealing edge (1) of the drain pipe and has a shape that at least partly follows the shape of the sealing edge (1).

## Description

### Field of the invention

The present invention belongs to the field of cars and other vehicles, more precisely to the field of devices for heating, cooling and ventilation as well as accessories for said devices. The invention relates to an improved drain pipe for ventilation and air conditioning system in vehicles.

### Background of the invention and the technical problem

For establishing and maintaining suitable climatic conditions vehicles are provided with air conditioning devices, which ensure ventilation, heating and/or cooling of the air inside the vehicle. Air conditioning and ventilation devices have an appropriate drain system, which prevents the water created during operation of air conditioning devices from entering the vehicle cabin. A part of this drain system is a drain pipe, which is installed into a suitable opening, wherein its position is usually fixed with a stable shape connection, such as snap fits. The mentioned drain pipe has on one end a sealing edge having a widened shape similar to a trumpet or a tube, wherein the final position during installation the sealing edge is pushed into a contact with the drain system of the air conditioning, which is stiffer. The sealing edge is thus an area on the element for removing water (tube), which is in contact with a piece that is sealed and at the same time compensates differences in the position between the two elements. This contact ensures sealed connection and prevents the water (condensed water) from entering into the vehicle cabin.

The installation process of the said drain pipe is carried out manually, which allows a possibility of mistakes and incorrect installation, which in turn leads to reduced function of the drain pipe. In addition, function of the drain pipe is further affected by presence of other components, each having different production and installation tolerances.

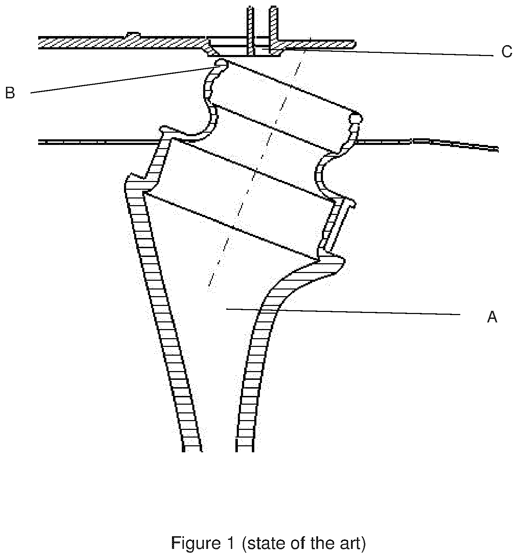

Movement of the drain pipe in the initial phase of installation is free, while it becomes defined in the moment when shape engaging parts provided on elements become engaged, wherein these engaging parts ensure a stable final position. In the initial phase of installation, in which the drain pipe can freely move, the sealing edge may be deformed in such a way that sealing between the sealing edge and the outlet hole of the air conditioning system is not ensured. A situation that may lead to such incorrect installation is shown in figure 1, where during the installation phase the inclined drain pipe A with a sealing edge touches the outlet hole of the drain pipe of the air conditioning device C in the area B. Upon placement into a correct position, the sealing edge is deformed in the area B in such a way that suitable sealing is not possible. Detection of this situation on a manufacturing line is difficult, as the element surrounding the drain pipe are already installed and consequently prevent visual detection.

The technical problem, which is solved by the present invention, is thus a construction of the drain pipe for an air conditioning and ventilation device, wherein the said pipe will be preferably made from rubber and will allow reliable installation without the possibility of deformation of a part of the drain pipe or its sealing edge, which is in contact with the drain element of the air conditioning device, wherein the drain pipe has to ensure suitable sealing even in case of non-optimal or incorrect installation.

### State of the art

Patent application EP0529262 describes a drain pipe for mounting in a hollow bearer, as a connection between two orifices in mutually opposite wall regions of the hollow bearer, especially for draining away condensation water underneath a screen of a motor vehicle. The drain pipe comprises an end collar assigned to the wall region surrounding one orifice and, at a distance from this collar, spreading arms distributed over the circumference of the drain pipe body, the spreading arms having supporting faces assigned to the wall region surrounding the other orifice and being elastically movable towards the drain pipe body.

Document CN106739932 discloses a drainpipe structure for a vehicle air conditioner, wherein the drainpipe structure comprises a drainpipe body comprising a first connecting pipe, a bending pipe with a first end connected with a second end of the first connecting pipe, and a second connecting pipe with a second end connected with a second end of the bending pipe. The interior of the bending pipe is provided three baffle plates, wherein a channel is formed between the first baffle plate and the third baffle plate. The drainpipe structure also comprises sealing members on connections of pipes.

Patent application JP2020062983 describes a structure for connecting a pipe with a vehicle air conditioning device, wherein the said structure has an attachment member provided with a hole, into which a first pipe is installed, and a cut-out, into which a second pipe is installed. Both pipes engage with protruding parts.

Utility model CN208745699 relates to a vehicle air conditioner drain pipe with water storage function. The water storage chamber bottom is located to the drain pipe, which has an attachment ring, buoyant ball, outlet and a conical guiding gutter that leads to the outlet.

Utility model CN208085625 discloses a drain pipe structure, including a connecting cap, which prevents damaging the drain pipe during installation on sunroofs and improves the installation process as well as sealing.

All of the above-mentioned solutions differ from the present invention in that their installation does not allow reliable sealing and does not prevent deformations of the sealing edge.

### Description of the solution of the technical problem

The technical problem is solved as defined in the independent claim, wherein preferred embodiments of the solution are disclosed in the dependent claims. The essence of the improved drain pipe for ventilation and air conditioning system in vehicles is in that the drain pipe has in its interior and/or exterior a reinforcement element, which enables a stable shape of the contact surface of the drain pipe during installation thereof into its final position. Consequently, a robust installation of the drain pipe into its final position and reliable sealing as well as prevention of leaking into a vehicle cabin is thus ensured, as the shape of the sealing edge is not altered.

The mentioned reinforcement element is installed in the sealing edge of the drain pipe or close to the sealing edge, respectively, in the latter case preferably as close to the sealing edge as possible, and has a shape which entirely or at least partly follows the shape of the sealing edge or it corresponds to its shape, so that during the installation process of the drain pipe at least a part of the reinforcement element comes into contact with the sealing edge, in case it was not in the initial position. The reinforcement element may be installed along the inner or the outer wall of the sealing edge or inside the sealing edge itself, depending of the manner of installation or fixation of the reinforcement element. Installation of the reinforcement element along the inner wall of the sealing edge is preferred, as it enables a more reliable installation of the drain pipe into a vehicle. In case a reinforcement element is installed from the outer side of the drain pipe and its sealing edge, it is preferred that a second reinforcement element is provided on the inner side of the drain pipe.

The reinforcement element is made from a material, which has a higher stiffness as the material of the drain pipe. Preferably the reinforcement element is made from a hard rubber or plastics, while also other materials such as metal or other alternatives known to the skilled person can be used. The reinforcement element may have circular (ring-like) shape, an oval shape, or its shape at least partly follows the shape of the sealing edge, if the latter is designed in non-standard shapes. The reinforcement element may be closed or open. In addition, the reinforcement element may be polygonal, cross-shaped or a mesh. A part of the sealing edge area, where the reinforcement element is installed, may have any dimension depending on the material of the reinforcement element, wherein stiffer the material of the reinforcement element is, the smaller the covered area of the sealing edge may be in order to prevent deformation of the sealing edge during installation of the drain pipe.

In the area of the sealing edge the reinforcement element is preferably inserted and affixed with a shape engaging connection. Therefore, the outer surface of the reinforcement element is preferably provided with protrusions, grooves, threads or similar shapes, which act as a shape engaging connection and enable fixation of the position of the reinforcement element. Alternatively, or additionally, any other suitable fixation method may be used, such as gluing with suitable glue, ultrasonic welding or injection overmoulding with a soft component, wherein in case of injection overmoulding or inserting into a groove, the reinforcement may be installed inside the sealing edge. An example of such reinforcement element is a wire overmoulded in the sealing edge itself, thereby increasing the stiffness of the latter to such extent that deformation during installation is not possible. The outer surface of the reinforcement element may be smooth, if fixation of the position is performed in any other way, such as gluing, ultrasound welding and injection overmoulding with a soft component. It is also possible that during installation the suitable shape of the sealing edge is ensured by suitably shaped external surroundings of the sealing edge.

The drain pipe according to the invention may have one, two or more reinforcement elements. They can be arranged at a pre-defined distance between each other or can be in contact. Their shapes may complement each other. In case several reinforcement elements are provided, different materials may be used, however, the preferred embodiment is that all are made from plastic material.

The drain pipe according to the invention has at least one sealing edge, the stiffness of which is increased as described above. In addition, according to a possible embodiment the drain pipe has a sealing edge on both sides, wherein the reinforcement element can be used in both or only one sealing edge. In any case, the bottom sealing edge continues into a pipe body (middle part) or an outlet (drain), so that the drain pipe can remove condensed water from the vehicle and thus prevents leaking into the vehicle cabin. The design of the outlet is arbitrary and independent from the present invention. The same is valid for the design of the drain pipe and optional additional parts of the drain pipe.

The method of installation of the improved drain pipe according to the invention is generally the same as existing methods, wherein:
- firstly, the drain pipe is with its sealing edge brought in the vicinity of an opening of the drain system of the vehicle air conditioning device,
- then the drain pipe is manually centred to the said opening of the drain system of the vehicle air conditioning device, wherein caution regarding the incline of the pipe is not necessary anymore, and
- finally, the drain pipe is pushed in the axis of an attachment element, so that attachment means engage with the attachment means on the drain pipe.

The invention will be described in further detail based on exemplary embodiments and figures, which show:
- Figure 1: A known drain pipe with its exterior during installation
- Figure 2: An improved drain pipe according to a possible embodiment
- Figure 3: A cross-section of the drain pipe shown in figure 2
- Figure 4: A reinforcement element

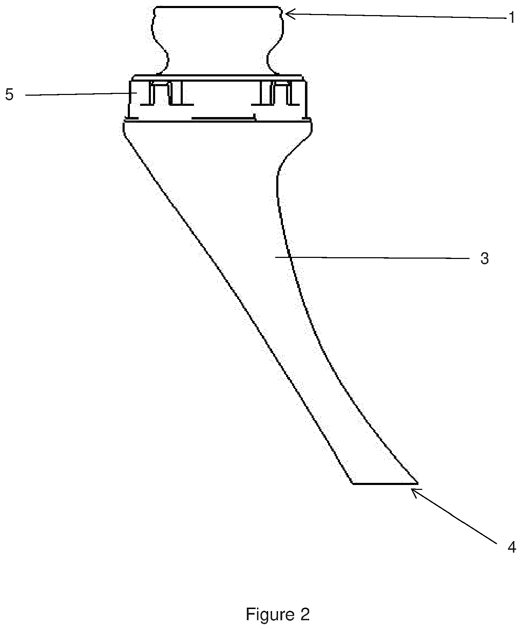

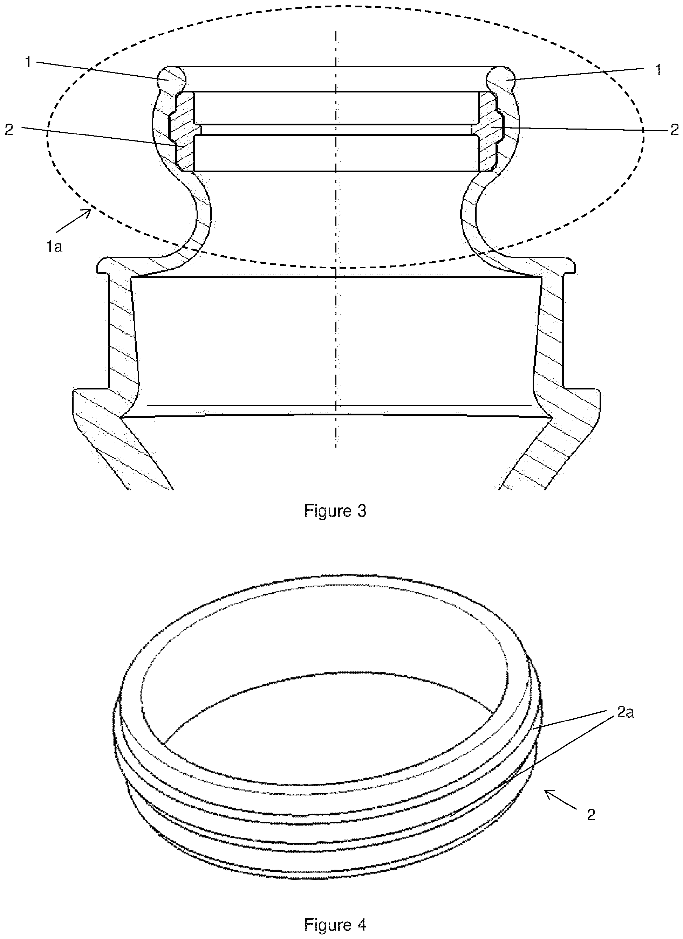

As already mentioned above, during installation of known drain pipes the sealing edge B may be deformed in such a way that sealing of the outlet opening C of the drain system of an air conditioning device is not satisfactory (figure 1). The improved drain pipe for a ventilation and air conditioning device for vehicles according to a possible embodiment, which is shown in figure 2, successfully solves this problem, wherein the drain pipe has a sealing edge 1, a middle part 3 and an outlet 4, which are usually made as one integral piece. The middle part of the drain pipe may be made from one, two or more pieces; usually it is made from rubber or a combination of materials, which are well known in the field of drain pipes. The drain pipe according to the presented embodiment is in its upper part near the sealing edge 1 provided with an attachment element 5, which is usually made from plastic material and which is intended for fixation of the drain pipe into the vehicle in a stable position and prevents disengagement of the drain pipe from its position during use/ride. For preventing deformation of the sealing edge 1 a reinforcement element 2 is provided in its area. The area 1a of the sealing edge 1 is shown in figure 3, the area being encircled with a dashed line. Preferably, the reinforcement element 2 is installed as close to the top of the sealing edge 1 as possible.

A cross-section of the drain pipe with the inserted reinforcement element is shown in figure 3. The reinforcement element 2 has a ring-like shape (figure 3), but can also have an oval shape or follows the shape of the sealing edge if the latter has any other shape. Its outer surface may be provided with protrusions, grooves, threads or similar shapes 2a, which allow fixation of the position of the reinforcement element. The reinforcement element 2 in inserted into the area of the sealing edge 1 and fixated with a shape engaging connection with grooves 2a, which function as shape engaging connections such as snap fits and prevent movement of the reinforcement element 2 during installation of the drain pipe. The reinforcement element 2 increases the stiffness of the area of the sealing edge 1 and thus prevents local deformation. The user consequently does not have to pay attention to proper installation of the drain pipe into its place.

## Claims

1. An improved drain pipe for ventilation and air conditioning system for vehicles, said drain pipe having a sealing edge (1) at least on one side and a release (4) on the other side, **characterized in that** in the interior and/or exterior of the sealing edge (1) are provided with at least one reinforcement element (2), which ensures a stable shape of the sealing edge (1) of the drain pipe, preferably during installation of the drain pipe.

2. The improved drain pipe according to claim 1, **characterized in that** the reinforcement element (2) is shaped to at least partly, preferably completely, follows the shape of the sealing edge (1) or corresponds to it.

3. The improved drain pipe according to claim 1 or 2, **characterized in that** the reinforcement element (2) is installed in the sealing edge (1) of the drain pipe or in its proximity, preferably as high as possible towards the sealing edge (1).

4. The improved drain pipe according to any of the preceding claims, **characterized in that** the shape of the reinforcement element (2) is preferably ring-like or oval-like, it may be closed or open, or the shape is cross-like, polygonal or grid-like.

5. The improved drain pipe according to any of the preceding claims, **characterized in that** the reinforcement element (2) in the area of the sealing edge (1) is affixed with shape engaging connection.

6. The improved drain pipe according to any of the preceding claims, **characterized in that** alternatively or additionally the reinforcement element (2) is fixed into the area of the sealing edge (1) in any suitable way, preferably by gluing, ultrasound welding or injection overmoulding with a soft component.

7. The improved drain pipe according to any of the preceding claims, **characterized in that** the outer surface of the reinforcement element (2) is provided with protrusions, grooves, threads or similar shapes (2a), which function as shape engaging connection.

8. The improved drain pipe according to any claim from 1 to 4, **characterized in that** the outer surface of the reinforcement element (2) is smooth and fixation is performed in any suitable manner, preferably by gluing, ultrasound welding or injection overmoulding.

9. The improved drain pipe according to any of the preceding claims, **characterized in that** the reinforcement element enables increased stiffness of the pipe with its shape and/or material from which the reinforcement element is made.

10. The improved drain pipe according to any of the preceding claims, **characterized in that** the reinforcement element is made from any suitable material, which has a higher stiffness than the drain pipe, preferably from a hard rubber, plastic material or metal.

11. The improved drain pipe according to the preceding claim, **characterized in that** a part of the sealing edge (1) area, wherein the reinforcement element (2) is located, has arbitrary dimensions depending on the material of the reinforcement element (2), wherein stiffer the material of the reinforcement element (2) is, the smaller the covered area of the sealing edge (1) may be in order to prevent deformation of the sealing edge during installation of the drain pipe.

12. The improved drain pipe according to any of the preceding claims, **characterized in that** it has one, two or more reinforcement elements (2).

13. The improved drain pipe according to the preceding claim, **characterized in that** it has two or more reinforcement elements (2), which are arranged at a distance from each other or are in contact with each other, wherein their shapes may complement each other.

14. The improved drain pipe according to any claim 12 or 13, **characterized in that** the reinforcement elements (2) are made from the same or different material.

15. A vehicle with the improved drain pipe according to any of the preceding claims.
